# EUROPEAN PATENT SPECIFICATION

(11) **EP 4 100 842 B1**
(45) Date of publication and mention of the grant of the patent: **04.06.2025**
(21) Application number: 21839305.6
(22) Date of filing: 13.07.2021
(51) Int. Cl.: G06F 13/38, G06F 13/40, G06F 1/18, G06F 1/26, H04L 12/10, H04L 12/40, G06F 1/16, G06F 13/42, H02J 1/10

(54) **USB/THUNDERBOLT TO ETHERNET ADAPTER WITH DYNAMIC MULTIPLEX POWER SUPPLY**
USB/THUNDERBOLT-ZU-ETHERNET-ADAPTER MIT DYNAMISCHER MULTIPLEXLEISTUNGSSPEISUNG
ADAPTATEUR USB/THUNDERBOLT VERS ETHERNET À ALIMENTATION ÉLECTRIQUE MULTIPLEXE DYNAMIQUE

(30) Priority: 30.04.2021 US 202117246527
(43) Date of publication of application: 14.12.2022
(73) Proprietor: Huddly Inc., Palo Alto, CA 94301 (US)
(72) Inventor: ALSTAD, Håvard, 0490 Oslo (NO); DAHLBACK, Jørgen, 1679 Kråkerøy (NO); ALMEIDA, Tomás Alexandre Saltão, 1258 Oslo (NO)
(74) Representative: Finnegan Europe LLP
(86) International application number: PCT/US2021/041476
(87) International publication number: WO 2022/231639

(56) References cited:
- EP-A1- 3 098 922
- WO-A2-2007/140467
- CN-U- 205 282 794
- US-A1- 2010 036 992
- US-A1- 2013 163 613
- US-A1- 2015 311 753
- US-A1- 2016 118 758

## Description

### BACKGROUND OF THE DISCLOSURE

The present disclosure relates in general to adapting USB and Thunderbolt connections to an Ethernet connection with power supply. Specifically, the present disclosure relates to systems and solutions for connecting and powering a peripheral device via its Ethernet port from a USB or Thunderbolt port of a connected computer. More specifically, the present disclosure relates to apparatuses adapting a USB or Thunderbolt connection to an Ethernet connection with dynamic multiplex power supply.

In modem enterprise and consumer electronics, high speed peripheral devices such as high resolution cameras and IoT ("Internet of Things") appliances often rely on a standard Ethernet connection to connect to their host computers. For example, remote meeting rooms or other smart rooms, smart home, and smart city applications are equipped with intelligent peripherals or sensors including smart cameras, microphones, speakers. Fast connectivity is critical between these intelligent peripherals and a centralized host computer in the room or on a network. Stable and robust power supply options are also indispensable to operate these intelligent peripherals with their host computer, thereby supporting data integration and processing in the system or on the network. Ethernet is commonly used in local area networks and well suited to support intelligent peripherals in these settings. Ethernet has also been extended to supply power over Ethernet, for example by using a PoE ("Power over Ethernet") injector or PoE switch.

However, most host computers have only one - if at all - Ethernet connection, for connecting into local area networks. They do not have a secondary Ethernet port to connect to Ethernet peripherals, and if they do, this connection does not provide power over Ethernet. Instead, host computers often come equipped with one or more USB, USB-C, or Thunderbolt connections. On the other hand, as real estate for the connectivity interfaces or ports on intelligent peripherals become increasingly scarce, it is advantageous if these peripheral devices can be powered through their standard Ethernet connection as they connect to their host computers.

There is therefore a need to support intelligent peripherals or IoT devices with their host computers in smart meeting rooms, smart homes, smart city or other application platforms without the need of adding complex or expensive infrastructure such as PoE switches, injectors, or installing additional cables. Specifically, there is a need for apparatuses and solutions that can supply an Ethernet connection from the host computer to a peripheral device and at the same time provide stable and robust power supply to the peripheral device over the same Ethernet connection.

CN205282794U describes a USB type-C conversion module that has a USB type-C connector, an RJ-45 connector, configuration passageway logic unit, and a signal translation unit.

WO2007/140467A2, describes an application connector which is coupled to a connector module and configured for coupling to an application processor. A power-over-Ethernet, PoE, circuit on the connector module is built either as power sourcing equipment, PSE, or powered device, PD, and is coupled between the network connector and the application connector.

EP3098922A1 describes an electronic device for controlling power including a plurality of ports configured to input power into the electronic device; a power controller that includes a first power conversion unit configured to convert a first power supplied from a first external device connected to a first port, and a second power conversion unit configured to convert a second power supplied from a second external device connected to a second port; and a controller that controls the power controller to selectively supply power to a target device by summing the first power and the second power.

### SUMMARY OF THE VARIOUS EMBODIMENTS

It is therefore an object of this disclosure to provide apparatuses and solutions for adapting USB and Thunderbolt connections to an Ethernet connection within device power over the Ethernet connection.

Particularly, in accordance with a first aspect of this disclosure, there is provided an apparatus adapting a USB connection to an Ethernet connection with dynamic multiplex power supply according to claim 1.

In an embodiment, the power multiplexer is adapted to output one of the direct current and VBUS to the PoE PSE controller. In yet another embodiment, the power multiplexer is adapted to output both the direct current and VBUS to the PoE PSE controller. In a further embodiment, the direct current is prioritized in the power output.

In a further embodiment, the power supply circuitry further comprises a USB PD ("Power Delivery") controller downstream to the USB connector and adapted to output a voltage to the power multiplexer.

In another embodiment, the power supply circuitry further comprises a load protection circuitry upstream to the power multiplexer and downstream to the USB-PD controller. The load protection circuitry is adapted to provide USB load protection. In yet another embodiment, the load protection circuitry is an electronic fuse ("eFuse"). In another embodiment, the signal is a multi-colored LED light visible on the exterior of the apparatus. A predetermined color is designated to indicate a sufficient current level. In yet another embodiment, the signal is a notification displayed to the computer connected through the USB port.

In yet another embodiment, the power supply circuitry further comprises a reverse polarity protection circuitry downstream of the DC power jack and upstream of the power multiplexer. The reverse polarity protection circuitry is adapted to provide protection from reverse polarity and over voltage.

In accordance with a second aspect of this disclosure, there is provided an apparatus adapting a Thunderbolt connection to an Ethernet connection with dynamic multiplex power supply according to claim 8.

In an embodiment, the power multiplexer is adapted to output one of the direct current and the voltage from the Thunderbolt connector. In yet another embodiment, the power multiplexer is adapted to output both the direct current and the voltage from the Thunderbolt connector.

In yet another embodiment, the signal is a multi-colored LED light visible on the exterior of the apparatus. A predetermined color is designated to indicate a sufficient current level. In a further embodiment, the signal is a notification displayed to the computer connected through the Thunderbolt port.

### BRIEF DESCRIPTION OF THE DRAWINGS

Figure 1 depicts an apparatus 100 according to one embodiment, which connects to a peripheral device 102 via its Ethernet port and a personal computer 101 via its USB/Thunderbolt port.
Figure 2 depicts the power supply circuitry and data flow circuitry of a USB to Ethernet adapter according to one embodiment.
Figure 3 depicts the power supply circuitry and data flow circuitry of a Thunderbolt to Ethernet adapter according to one embodiment.

### DETAILED DESCRIPTION OF THE VARIOUS EMBODIMENTS

The apparatuses of this disclosure are adapted to combine USB/Thunderbolt to Ethernet controllers with PoE power injection based on dynamic multiplex power supply in various embodiments. The power supply is sourced from an external DC power input and/or from a host computer over USB or Thunderbolt connections.

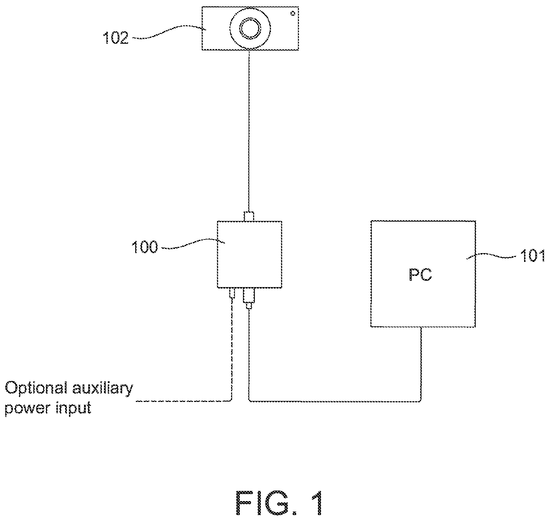

Referring to Figure 1, an adapter apparatus 100 according to one embodiment of disclosure connects to a peripheral device 102 via its Ethernet port and a personal computer ("PC") 101 via its USB/Thunderbolt port. The peripheral device 102 is a smart camera and the PC is the host computer for the smart camera in this embodiment. The adapter apparatus 100 is connected to an auxiliary power source, which supplies direct current in one embodiment. The adapter apparatus 100 sources its power from the USB or Thunderbolt connection to the host PC 101 in various embodiments. Therefore, the smart camera 102 maintains a high speed data connection between its Ethernet port to the USB or Thunderbolt port of the host PC 101 through the adapter apparatus 100. At the same time, the smart camera 102 is powered over the same Ethernet connection through the adapter apparatus 100. In various embodiments of this disclosure, the peripheral device 102 may be any PoE enabled peripheral device and the host PC 101 may be any connected computer in the same space or on the network.

### Data Flow and Power Supply Circuitries

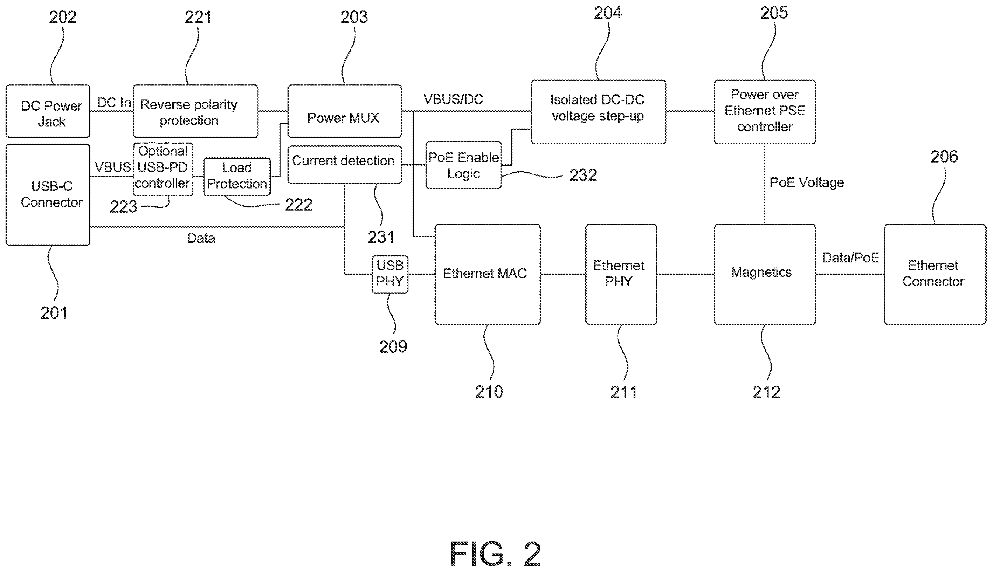

An exemplary apparatus of this disclosure includes a data flow circuitry and a power supply circuitry. Referring to Figure 2, in one embodiment, the data flow circuitry supports data transfer between the USB-C connector 201 and the Ethernet connector 206. In a sequential order, the data flow circuitry includes a USB PHY 209, an Ethernet MAC 210, an Ethernet PHY 211, and a magnetics layer 212. Data is sent and received on both ends of the data flow circuitry: at the USB-C connector 201 and the Ethernet connector 206.

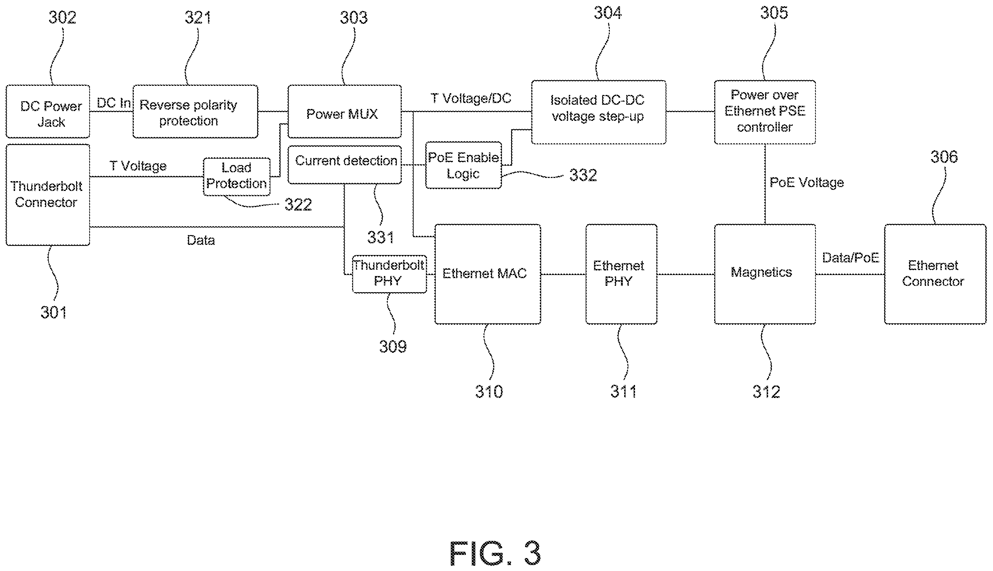

Similarly, referring to Figure 3, in another embodiment, the data flow circuitry supports data transfer between the Thunderbolt connector 301 and the Ethernet connector 306. In a sequential order, the data flow circuitry in this embodiment includes a Thunderbolt PHY 309, an Ethernet MAC 310, an Ethernet PHY 311, and a magnetics layer 312. Data is sent and received on both ends of the data flow circuitry: at the Thunderbolt connector 301 and the Ethernet connector 306.

The power supply circuitry supports dynamic multiplex power supply to the Ethernet connector from a multiplicity of power sources, including direct current power sources, USB-C, Thunderbolt and similar connections in various embodiments. Referring to Figure 2, in one embodiment, the power supply circuitry includes a DC power jack 202, which delivers direct current into the power supply circuitry, and a USB-C connector 201, which delivers a VBUS voltage into the power supply circuitry. In this embodiment, the power supply circuitry includes a power multiplexer ("Power MUX") 203, which receives the VBUS voltage and DC input from the USB-C connector 201 and the DC power jack 202, respectively. Upstream of the power multiplexer 203 is a reverse polarity protection circuitry 221 connected to the DC power jack 202 and a load protection circuitry 222 connected to the USB-C connector 201. The reverse polarity protection 221 provides protection from reverse polarity and over current/voltage that may be delivered from the DC power jack 202. The load protection circuitry 222 provides protection from overload in the VBUS voltage delivered from the USB-C connector 201. In one embodiment, the load protection circuitry 222 is an eFuse device. The eFuse device ensures compliance with the USB standard load specifications. In alternative embodiments, a USB-PD controller is included in the power supply circuitry downstream of the USB-C connector and upstream of the load protection circuitry 222. USB PD and similar technologies provide increased power delivery over the USB interface in the power supply circuitry in these alternative embodiments.

Downstream of the power multiplexer 203 in a sequential order, the power supply circuitry includes a DC-DC voltage step-up converter 204, a PoE PSE controller 205, and the magnetics layer 212. In some embodiments the DC-DC voltage step-up converter is an isolated DC-DC voltage step-up converter. The DC-DC voltage step-up converter receives VBUS and/or DC from the power multiplexer 203 and delivers an increased voltage (and current) to the PoE PSE controller 205. The PoE PSE controller 205 outputs a PoE voltage to the magnetics layer 212, which in turn delivers the PoE to the Ethernet connector 206 coupled with data carried and transferred between the magnetics layer 212 and the Ethernet connector 206.

Referring to Figure 3, in another embodiment, the power supply circuitry includes a DC power jack 302, which delivers direct current into the power supply circuitry, and a Thunderbolt connector 301, which delivers a Thunderbolt voltage ("T voltage") into the power supply circuitry. In this embodiment, the power supply circuitry includes a power multiplexer ("Power MUX") 303, which receives the T voltage and DC input from the Thunderbolt connector 301 and the DC power jack 302, respectively. Upstream of the power multiplexer 303 is a reverse polarity protection circuitry 321 connected to the DC power jack 302 and a load protection circuitry 322 connected to the Thunderbolt connector 301. The reverse polarity protection 321 provides protection from reverse polarity and over current/voltage that may be delivered from the DC power jack 302. The load protection circuitry 322 provides protection from overload in the T voltage delivered from the Thunderbolt connector 301 and ensures compliance with Thunderbolt standard load specifications.

Downstream of the power multiplexer 303 in a sequential order, the power supply circuitry includes a DC-DC voltage step-up converter 304, a PoE PSE controller 305, and the magnetics layer 312. In some embodiments the DC-DC voltage step-up converter is an isolated DC-DC voltage step-up converter. The DC-DC voltage step-up converter receives the T voltage and/or DC from the power multiplexer 303 and delivers an increased voltage (and current) to the PoE PSE controller 305. The PoE PSE controller 305 outputs a PoE voltage to the magnetics layer 312, which in turn delivers the PoE to the Ethernet connector 306 coupled with data carried and transferred between the magnetics layer 312 and the Ethernet connector 306.

### Dynamic Multiplex Power Supply

As discussed above, a power multiplexer is utilized to select and regulate power supply between DC power and USB VBUS or Thunderbolt voltage in various embodiments. In one embodiment, both DC and USB/Thunderbolt power sources are connected simultaneously. The power multiplexer regulates power supply dynamically based on load changes in the power supply circuitry and is sensitive to input from the connected host computer 101 through its USB or Thunderbolt port. In another embodiment, the power multiplexer prioritizes the DC power jack 202 and 302 if the voltage supplied on the DC line is at a sufficient level to power the peripheral device 102. In a further embodiment, the power multiplexer switches between the DC power and USB VBUS or Thunderbolt voltage if one of the power sources is terminated or removed from the power supply circuitry. Through dynamic multiplex power supply, therefore, the adapter apparatus 100 of this disclosure keeps the peripheral device 102 powered on its network and connected to its host computer 101.

For an exemplary apparatus of this disclosure, the power supply circuitry including USB PD may carry a voltage of 5V, 9V, 12V, or 15V and a current of 3A or 5A maximum. The USB-C VBUS may carry a minimum of 4.75V and maximum of 5.25V voltage, and a maximum of 3A current pursuant to the USB standard. The PoE (802.3af / 802.3at type 1) on the power supply circuitry in one embodiment may be in the range of 37 to 57V with a current up to 0.35A maximum.

### Current Detection Circuitry and PoE Enable Logic

The adapter apparatus 100 of this disclosure includes a current detection circuitry 231 and 331 adapted to detect whether sufficient power is available to enable the DC-DC voltage step-up converter 204 and 304 and the PoE PSE controller 205 and 305. If DC power is detected at a sufficient current/voltage level, the current detection circuitry provides a user notification that power is available to enable the PoE PSE circuitry. If USB VBUS or Thunderbolt voltage is supplied on the power supply circuitry, the current detection circuitry 231 or 331 reads the communicated current from the USB host or the Thunderbolt host. If the USB or Thunderbolt host current is detected at a sufficient level, a user notification is provided that the current power level is sufficient to enable the PoE PSE circuitry.

In one embodiment, the user notification is a LED light visible on the exterior of the adapter apparatus 100. If a sufficient current level is detected, the light is enabled and turned on. In another embodiment, the LED light is multi-colored, and if a sufficient current level is detected, a predetermined color, such as green, is displayed. A different color, such as red, may be designated to signal that no sufficient current level is detected. In an alternative embodiment, the notification signal is a message communicated to a driver or an application on the connected host computer 101 through its USB or Thunderbolt port and displayed to a user of the host computer 101.

The power supply circuitry includes a PoE enable logic block 232 and 332 downstream of the current detection circuitry 231 and 331, respectively, whereby the DC-DC voltage step-up converter 204 and 304 are activated and the PoE PSE controller 205 and 305 enabled when a sufficient current level is detected. In one embodiment, the DC-DC voltage step-up converter 204 and 304 is an isolated DC-DC voltage step-up converter.

If no sufficient current level is detected from the DC power, USB VBUS or Thunderbolt voltage, the current detection circuitry 231 and 331 display a user notification that insufficient power is available, and the PoE enable logic block 232 and 332 deactivate the DC-DC voltage step-up converter 204 and 304 and disable the PoE PSE controller 205 and 305. The Ethernet connector 206 and 306 are adapted to send or receive data decoupled from power in this embodiment.

According to certain embodiments, the current detection circuitry and the PoE enable logic block are implemented using integrated circuits as hardware in the adapter apparatus 100. In an alternative embodiment, the current detection circuitry and the PoE enable logic block are substantiated in software, using a microcontroller, a processor, a FPGA ("field-programmable gate array") or CPLD ("complex programmable logic device"). The input signals may be read by the microcontroller in this embodiment, and the combinatory logic is implemented in software, with a hardware signal from the microcontroller enabling the PoE. According to this embodiment, using the microcontroller, further monitoring and notification may be enabled for the adapter apparatus 100. For example, temperature measurements, PoE output power consumption, PoE output voltage levels, amount of time the PoE has been enabled, the speed of the Ethernet connection linked to the peripheral device 102, are among the status parameters that may be tracked and passed back to the USB or Thunderbolt host computer 101. These parameters may be used in an application on the host computer 101 in this embodiment, to enable notification to the user and further management and regulation of the power supply circuitry in the adapter apparatus 100.

The descriptions of the various embodiments, including the drawings and examples, are to exemplify and not to limit the invention and the various embodiments thereof.

## Claims

1. An apparatus (100) adapting a USB connection to an Ethernet connection with dynamic multiplex power supply, comprising:
a USB-C connector (201) capable of connecting to a USB port of a computer (101);
an Ethernet connector (206) capable of connecting to an Ethernet port of a peripheral device (102);
a data flow circuitry adapted to transmit data between the USB-C connector and the Ethernet connector, said data flow circuitry comprising a USB PHY (209) connecting to an Ethernet MAC (210), which is connected to an Ethernet PHY (211), the Ethernet PHY in turn being connected to a magnetics layer (212); and
a power supply circuitry adapted to provide dynamic multiplex power supply to the Ethernet connector from a multiplicity of power sources, said multiplicity comprising a direct current power jack (202) and a VBUS from the USB-C connector, wherein said power supply circuitry comprises a power multiplexer (203) adapted to receive power from the multiplicity and send power to a power over Ethernet power sourcing equipment, PoE PSE, controller (205), wherein the PoE PSE controller is connected to the magnetics layer thereby transmitting power to the magnetics layer, and
wherein the magnetics layer is adapted to deliver PoE to the Ethernet connector coupled with data;
wherein the power supply circuitry further comprises:
a direct current - direct current, DC-DC, voltage step-up converter (204) downstream to the power multiplexer, the DC-DC voltage step-up converter being adapted to increase voltage in the power supply circuitry before outputting to the PoE PSE controller;
a current detection circuitry (231), the current detection circuitry being adapted to detect the current level upstream the DC-DC voltage step-up converter and provide a signal indicating if a sufficient current level exists; and
a PoE enable logic block (232) downstream of the current detection circuitry, the PoE enable logic block being adapted to activate the DC-DC voltage step-up converter and enable the PoE PSE controller when a sufficient current level is detected, and deactivate the DC-DC voltage step-up converter and disable the PoE PSE controller when no sufficient current level is detected, wherein the Ethernet connector is adapted to transmit data decoupled from power when the DC-DC voltage step-up converter is deactivated.

2. The apparatus of claim 1, wherein the power multiplexer is adapted to output one of the direct current and VBUS to the PoE PSE controller.

3. The apparatus of claim 1, wherein the power supply circuitry further comprises a USB Power Delivery, USB-PD, controller (223) downstream to the USB connector and adapted to output a voltage to the power multiplexer.

4. The apparatus of claim 3, wherein the power supply circuitry further comprises a load protection circuitry (222) upstream to the power multiplexer and downstream to the USB-PD controller, the load protection circuitry being adapted to provide USB load protection.

5. The apparatus of claim 4, wherein the load protection circuitry is an electronic fuse (eFuse).

6. The apparatus of claim 1, wherein the signal is one of the group consisting of (i) a multi-colored LED light visible on the exterior of the apparatus, wherein a predetermined color is designated to indicate a sufficient current level, and (ii) a notification displayed to the computer connected through the USB port.

7. The apparatus of claim 1, wherein the power supply circuitry further comprises a reverse polarity protection circuitry (221) downstream of the DC power jack and upstream of the power multiplexer, the reverse polarity protection circuitry being adapted to provide protection from reverse polarity and over voltage.

8. An apparatus (100) adapting a Thunderbolt connection to an Ethernet connection with dynamic multiplex power supply, comprising:
a Thunderbolt connector (301) capable of connecting to a Thunderbolt port of a computer;
an Ethernet connector (306) capable of connecting to an Ethernet port of a peripheral device;
a data flow circuitry adapted to transmit data between the Thunderbolt connector and the Ethernet connector, said data flow circuitry comprising a Thunderbolt PHY (309) connecting to an Ethernet MAC (310), which is connected to an Ethernet PHY (311), the Ethernet PHY in turn being connected to a magnetics layer (312); and
a power supply circuitry adapted to provide dynamic multiplex power supply to the Ethernet connector from a multiplicity of power sources, said multiplicity comprising a direct current power jack (302) and a voltage from the Thunderbolt connector, wherein said power supply circuitry comprises a power multiplexer (303) adapted to receive power from the multiplicity and send power to a power over Ethernet power sourcing equipment, PoE PSE, controller (305), wherein the PoE PSE controller is connected to the magnetics layer thereby transmitting power to the magnetics layer, and wherein the magnetics layer is adapted to deliver PoE to the Ethernet connector coupled with data;
wherein the power supply circuitry further comprises:
a direct current - direct current, DC-DC, voltage step-up converter (304) downstream to the power multiplexer, the DC-DC voltage step-up converter being adapted to increase voltage in the power supply circuitry before outputting to the PoE PSE controller;
a current detection circuitry (331), the current detection circuitry being adapted to detect the current level upstream the DC-DC voltage step-up converter and provide a signal indicating if a sufficient current level exists; and
a PoE enable logic block (332) downstream of the current detection circuitry, the PoE enable logic block being adapted to activate the DC-DC voltage step-up converter and enable the PoE PSE controller when a sufficient current level is detected, and deactivate the DC-DC voltage step-up converter and disable the PoE PSE controller when no sufficient current level is detected, wherein the Ethernet connector is adapted to transmit data decoupled from power when the DC-DC voltage step-up converter is deactivated.

9. The apparatus of claim 8, wherein the power multiplexer is adapted to output one of the direct current and the voltage from the Thunderbolt connector.

10. The apparatus of claim 8, wherein the signal is one of the group consisting of (i) a multi-colored LED light visible on the exterior of the apparatus, wherein a predetermined color is designated to indicate a sufficient current level, and (ii) a notification displayed to the computer connected through the Thunderbolt port.

## Patentansprüche

1. Gerät (100), das eine USB-Verbindung an eine Ethernet-Verbindung mit dynamischer Multiplexleistungsspeisung anpasst, umfassend:
einen USB-C-Verbinder (201), der in der Lage ist, mit einem USB-Anschluss eines Rechners (101) verbunden zu werden;
einen Ethernet-Verbinder (206), der in der Lage ist, mit einem Ethernet-Anschluss einer Peripherievorrichtung (102) verbunden zu werden;
eine Datenflussschaltung, die angepasst ist, um Daten zwischen dem USB-C-Verbinder und dem Ethernet-Verbinder zu übertragen, die Datenflussschaltung umfassend einen USB-PHY (209), der mit einem Ethernet-MAC (210) verbunden ist, der mit einem Ethernet-PHY (211) verbunden ist, wobei der Ethernet-PHY wiederum mit einer magnetischen Schicht (212) verbunden ist; und
eine Leistungsspeisungsschaltung, die angepasst ist, um dem Ethernet-Verbinder dynamische Multiplexleistungsspeisung aus einer Vielzahl von Leistungsquellen bereitzustellen, die Vielzahl umfassend eine Gleichstrom-Leistungsbuchse (202) und einen VBUS von dem USB-C-Verbinder, wobei die Leistungsspeisungsschaltung einen Leistungsmultiplexer (203) umfasst, der angepasst ist, um Leistung von der Vielzahl zu empfangen und Leistung an eine Steuerung für Leistung-über-Ethernet-Leistungsversorgungseinrichtung, PoE-PSE, (205) zu senden, wobei die PoE-PSE-Steuerung mit der magnetischen Schicht verbunden ist, wodurch Leistung an die magnetische Schicht übertragen wird, und wobei die magnetische Schicht angepasst ist, um dem mit Daten gekoppelten Ethernet-Verbinder PoE zuzuführen;
wobei die Leistungsspeisungsschaltung ferner Folgendes umfasst:
einen Aufwärtswandler für Gleichstrom-Gleichstrom-,DC-DC-,Spannung (204) stromabwärts von dem Leistungsmultiplexer, wobei der Aufwärtswandler für DC-DC-Spannung angepasst ist, um eine Spannung in der Leistungsspeisungsschaltung zu erhöhen, bevor sie an die PoE-PSE-Steuerung ausgegeben wird;
eine Stromerfassungsschaltung (231), wobei die Stromerfassungsschaltung angepasst ist, um den Strompegel stromaufwärts von dem Aufwärtswandler für DC-DC-Spannung zu erfassen und ein Signal bereitzustellen, das angibt, ob ein ausreichender Strompegel vorhanden ist; und
einen Logikblock für PoE-Freigabe (232) stromabwärts von der Stromerfassungsschaltung, wobei der Logikblock für PoE-Freigabe angepasst ist, um den Aufwärtswandler für DC-DC-Spannung zu aktivieren und die PoE-PSE-Steuerung freizugeben, wenn ein ausreichender Strompegel erfasst wird, und den Aufwärtswandler für DC-DC-Spannung zu deaktivieren und die PoE-PSE-Steuerung zu sperren, wenn kein ausreichender Strompegel erfasst wird, wobei der Ethernet-Verbinder angepasst ist, um von Leistung entkoppelte Daten zu übertragen, wenn der Aufwärtswandler für DC-DC-Spannung deaktiviert ist.

2. Gerät nach Anspruch 1, wobei der Leistungsmultiplexer angepasst ist, um eines von dem Gleichstrom und VBUS an die PoE-PSE-Steuerung auszugeben.

3. Gerät nach Anspruch 1, wobei die Leistungsspeisungsschaltung ferner eine Steuerung für USB-Leistungszufuhr, USB-PD, (223) stromabwärts von dem USB-Verbinder umfasst und angepasst ist, um eine Spannung an den Leistungsmultiplexer auszugeben.

4. Gerät nach Anspruch 3, wobei die Leistungsspeisungsschaltung ferner eine Lastschutzschaltung (222) stromaufwärts von dem Leistungsmultiplexer und stromabwärts von der USB-PD-Steuerung umfasst, wobei die Lastschutzschaltung angepasst ist, um einen USB-Lastschutz bereitzustellen.

5. Gerät nach Anspruch 4, wobei die Lastschutzschaltung eine elektronische Sicherung (eFuse) ist.

6. Gerät nach Anspruch 1, wobei das Signal eines aus der Gruppe ist, bestehend aus (i) einem mehrfarbigen LED-Licht, das an der Außenseite des Geräts sichtbar ist, wobei eine vorbestimmte Farbe dazu bestimmt ist, einen ausreichenden Strompegel anzugeben, und (ii) einer Benachrichtigung, die dem Rechner angezeigt wird, der über den USB-Anschluss verbunden ist.

7. Gerät nach Anspruch 1, wobei die Leistungsspeisungsschaltung ferner eine Verpolungsschutzschaltung (221) stromabwärts von der DC-Leistungsbuchse und stromaufwärts von dem Leistungsmultiplexer umfasst, wobei die Verpolungsschutzschaltung angepasst ist, um Schutz vor Verpolung und Überspannung bereitzustellen.

8. Gerät (100), die eine Thunderbolt-Verbindung an eine Ethernet-Verbindung mit dynamischer Multiplexleistungsspeisung anpasst, umfassend:
einen Thunderbolt-Verbinder (301), der in der Lage ist, mit einem Thunderbolt-Anschluss eines Rechners verbunden zu werden;
einen Ethernet-Verbinder (306), der in der Lage ist, mit einem Ethernet-Anschluss einer Peripherievorrichtung verbunden zu werden;
eine Datenflussschaltung, die angepasst ist, um Daten zwischen dem Thunderbolt-Verbinder und dem Ethernet-Verbinder zu übertragen, die Datenflussschaltung umfassend einen Thunderbolt-PHY (309), der mit einem Ethernet-MAC (310) verbunden ist, der mit einem Ethernet-PHY (311) verbunden ist, wobei der Ethernet-PHY wiederum mit einer magnetischen Schicht (312) verbunden ist; und
eine Leistungsspeisungsschaltung, die angepasst ist, um dem Ethernet-Verbinder dynamische Multiplexleistungsspeisung aus einer Vielzahl von Leistungsquellen bereitzustellen, die Vielzahl umfassend eine Gleichstrom-Leistungsbuchse (302) und eine Spannung von dem Thunderbolt-Verbinder, wobei die Leistungsspeisungsschaltung einen Leistungsmultiplexer (303) umfasst, der angepasst ist, um Leistung von der Vielzahl zu empfangen und Leistung an eine Steuerung für Leistung-über-Ethernet-Leistungsversorgungseinrichtung, PoE-PSE, (305) zu senden, wobei die PoE-PSE-Steuerung mit der magnetischen Schicht verbunden ist, wodurch Leistung an die magnetische Schicht übertragen wird, und wobei die magnetische Schicht angepasst ist, um dem mit Daten gekoppelten Ethernet-Verbinder PoE zuzuführen;
wobei die Leistungsspeisungsschaltung ferner Folgendes umfasst:
einen Aufwärtswandler für Gleichstrom-Gleichstrom-,DC-DC-,Spannung (304) stromabwärts von dem Leistungsmultiplexer, wobei der Aufwärtswandler für DC-DC-Spannung angepasst ist, um eine Spannung in der Leistungsspeisungsschaltung zu erhöhen, bevor sie an die PoE-PSE-Steuerung ausgegeben wird;
eine Stromerfassungsschaltung (331), wobei die Stromerfassungsschaltung angepasst ist, um den Strompegel stromaufwärts von dem Aufwärtswandler für DC-DC-Spannung zu erfassen und ein Signal bereitzustellen, das angibt, ob ein ausreichender Strompegel vorhanden ist; und
einen Logikblock für PoE-Freigabe (332) stromabwärts von der Stromerfassungsschaltung, wobei der Logikblock für PoE-Freigabe angepasst ist, um den Aufwärtswandler für DC-DC-Spannung zu aktivieren und die PoE-PSE-Steuerung freizugeben, wenn ein ausreichender Strompegel erfasst wird, und den Aufwärtswandler für DC-DC-Spannung zu deaktivieren und die PoE-PSE-Steuerung zu sperren, wenn kein ausreichender Strompegel erfasst wird, wobei der Ethernet-Verbinder angepasst ist, um von Leistung entkoppelte Daten zu übertragen, wenn der Aufwärtswandler für DC-DC-Spannung deaktiviert ist.

9. Gerät nach Anspruch 8, wobei der Leistungsmultiplexer angepasst ist, um eines von dem Gleichstrom oder die Spannung von dem Thunderbolt-Verbinder auszugeben.

10. Gerät nach Anspruch 8, wobei das Signal eines aus der Gruppe ist, bestehend aus (i) einem mehrfarbigen LED-Licht, das an der Außenseite des Geräts sichtbar ist, wobei eine vorbestimmte Farbe dazu bestimmt ist, einen ausreichenden Strompegel anzugeben, und (ii) einer Benachrichtigung, die dem Rechner angezeigt wird, der über den Thunderbolt-Anschluss verbunden ist.

## Revendications

1. Appareil (100) adaptant une connexion USB à une connexion Ethernet à alimentation électrique multiplexe dynamique, comprenant :
un connecteur USB-C (201) capable de se connecter à un port USB d'un ordinateur (101) ;
un connecteur Ethernet (206) capable de se connecter à un port Ethernet d'un dispositif périphérique (102) ;
un circuit de flux de données adapté pour transmettre des données entre le connecteur USB-C et le connecteur Ethernet, ledit circuit de flux de données comprenant une PHY USB (209) se connectant à une MAC Ethernet (210), qui est connectée à une PHY Ethernet (211), la PHY Ethernet étant à son tour connectée à une couche magnétique (212) ; et
un circuit d'alimentation électrique adapté pour fournir une alimentation électrique multiplexe dynamique au connecteur Ethernet à partir d'une multiplicité de sources d'énergie, ladite multiplicité comprenant une prise d'alimentation électrique en courant continu (202) et un VBUS à partir du connecteur USB-C, ledit circuit d'alimentation électrique comprenant un multiplexeur de puissance (203) adapté pour recevoir de l'énergie de la multiplicité et envoyer de l'énergie à un dispositif de commande d'équipement de source d'alimentation électrique pour alimentation électrique par Ethernet, PSE PoE, (205), ledit dispositif de commande de PSE PoE étant connecté à la couche magnétique transmettant ainsi de l'énergie à la couche magnétique, et ladite couche magnétique étant adaptée pour fournir la PoE au connecteur Ethernet couplé à des données ;
ledit circuit d'alimentation électrique comprenant en outre :
un convertisseur élévateur de tension en courant continu - courant continu, CC-CC (204) en aval du multiplexeur de puissance, le convertisseur élévateur de tension CC-CC étant adapté pour augmenter la tension dans le circuit d'alimentation électrique avant sa sortie vers le dispositif de commande de PSE PoE ;
un circuit de détection de courant (231), le circuit de détection de courant étant adapté pour détecter le niveau de courant en amont du convertisseur élévateur de tension CC-CC et fournir un signal indiquant si un niveau de courant suffisant existe ; et
un bloc logique d'activation de PoE (232) en aval du circuit de détection de courant, le bloc logique d'activation de PoE étant adapté pour activer le convertisseur élévateur de tension CC-CC et activer le dispositif de commande de PSE PoE lorsqu'un niveau de courant suffisant est détecté, et désactiver le convertisseur élévateur de tension CC-CC et désactiver le dispositif de commande de PSE PoE lorsqu'aucun niveau de courant suffisant n'est détecté, ledit connecteur Ethernet étant adapté pour transmettre des données découplées de l'alimentation lorsque le convertisseur élévateur de tension CC-CC est désactivé.

2. Appareil selon la revendication 1, ledit multiplexeur de puissance étant adapté pour délivrer un parmi le courant continu et la VBUS au dispositif de commande de PSE PoE.

3. Appareil selon la revendication 1, ledit circuit d'alimentation électrique comprenant en outre un dispositif de commande (223) d'alimentation électrique USB, USB-PD, en aval du connecteur USB et adapté pour délivrer une tension au multiplexeur de puissance.

4. Appareil selon la revendication 3, ledit circuit d'alimentation électrique comprenant en outre un circuit de protection de charge (222) en amont du multiplexeur de puissance et en aval du dispositif de commande d'USB-PD, ledit circuit de protection de charge étant adapté pour fournir une protection de charge USB.

5. Appareil selon la revendication 4, ledit circuit de protection de charge étant un fusible électronique (eFuse).

6. Appareil selon la revendication 1, ledit signal étant un signal du groupe constitué par (i) une lumière LED multicolore visible à l'extérieur de l'appareil, une couleur prédéfinie étant désignée pour indiquer un niveau de courant suffisant, et (ii) une notification affichée sur l'ordinateur connecté par l'intermédiaire du port USB.

7. Appareil selon la revendication 1, ledit circuit d'alimentation électrique comprenant en outre un circuit de protection de polarité inverse (221) en aval de la prise d'alimentation en CC et en amont du multiplexeur de puissance, ledit circuit de protection de polarité inverse étant adapté pour fournir une protection contre une polarité inverse et une surtension.

8. Appareil (100) adaptant une connexion Thunderbolt à une connexion Ethernet à alimentation électrique multiplexe dynamique, comprenant :
un connecteur Thunderbolt (301) capable de se connecter à un port Thunderbolt d'un ordinateur ;
un connecteur Ethernet (306) capable de se connecter à un port Ethernet d'un dispositif périphérique ;
un circuit de flux de données adapté pour transmettre des données entre le connecteur Thunderbolt et le connecteur Ethernet, ledit circuit de flux de données comprenant une PHY Thunderbolt (309) se connectant à une MAC Ethernet (310), qui est connectée à une PHY Ethernet (311), la PHY Ethernet étant à son tour connectée à une couche magnétique (312) ; et
un circuit d'alimentation électrique adapté pour fournir une alimentation électrique multiplexe dynamique au connecteur Ethernet à partir d'une multiplicité de sources d'énergie, ladite multiplicité comprenant une prise d'alimentation électrique en courant continu (302) et une tension provenant du connecteur Thunderbolt, ledit circuit d'alimentation électrique comprenant un multiplexeur de puissance (303) adapté pour recevoir de l'énergie de la multiplicité et envoyer de l'énergie à un dispositif de commande d'équipement de source d'alimentation électrique pour alimentation électrique par Ethernet, PSE PoE, (305), ledit dispositif de commande de PSE PoE étant connecté à la couche magnétique transmettant ainsi de l'énergie à la couche magnétique, et ladite couche magnétique étant adaptée pour fournir la PoE au connecteur Ethernet couplé à des données ;
ledit circuit d'alimentation électrique comprenant en outre :
un convertisseur élévateur de tension en courant continu - courant continu, CC-CC (304) en aval du multiplexeur de puissance, le convertisseur élévateur de tension CC-CC étant adapté pour augmenter la tension dans le circuit d'alimentation électrique avant sa sortie vers le dispositif de commande de PSE PoE ;
un circuit de détection de courant (331), le circuit de détection de courant étant adapté pour détecter le niveau de courant en amont du convertisseur élévateur de tension CC-CC et fournir un signal indiquant si un niveau de courant suffisant existe ; et
un bloc logique d'activation de PoE (332) en aval du circuit de détection de courant, le bloc logique d'activation de PoE étant adapté pour activer le convertisseur élévateur de tension CC-CC et activer le dispositif de commande de PSE PoE lorsqu'un niveau de courant suffisant est détecté, et désactiver le convertisseur élévateur de tension CC-CC et désactiver le dispositif de commande de PSE PoE lorsqu'aucun niveau de courant suffisant n'est détecté, ledit connecteur Ethernet étant adapté pour transmettre des données découplées de l'alimentation lorsque le convertisseur élévateur de tension CC-CC est désactivé.

9. Appareil selon la revendication 8, ledit multiplexeur de puissance étant adapté pour délivrer un parmi le courant continu et la tension à partir du connecteur Thunderbolt.

10. Appareil selon la revendication 8, ledit signal étant un signal du groupe constitué par (i) une lumière LED multicolore visible à l'extérieur de l'appareil, une couleur prédéfinie étant désignée pour indiquer un niveau de courant suffisant, et (ii) une notification affichée sur l'ordinateur connecté par l'intermédiaire du port Thunderbolt.
